# FASCICULE DE BREVET EUROPEEN

(11) **EP 2 228 127 B1**
(45) Date de publication et mention de la délivrance du brevet: **04.11.2015**
(21) Numéro de dépôt: 10154389.0
(22) Date de dépôt: 23.02.2010
(51) Int. Cl.: B01F 3/08, C01B 33/12

(54) **Procédé de préparation de particules de silice poreuses, lesdites particules et leurs utilisations**
Verfahren zur Herstellung von porösen Kieselsäurepartikel, die erhaltene Kieselsäurepartikel und ihre Verwendung
Process for preparing porous silica particles, the silica particles obtained and their use

(30) Priorité: 27.02.2009 FR 0951239
(43) Date de publication de la demande: 15.09.2010
(73) Titulaire: Commissariat à l'Énergie Atomique et aux Énergies Alternatives, 75015 Paris (FR)
(72) Inventeur: Auger, Aurélien, 72000, LE MANS (FR); Poncelet, Olivier, 38000, GRENOBLE (FR)
(74) Mandataire: Augarde, Eric

(56) Documents cités:
- WO-A-99/36357
- R. VACASSY ET.AL.: "Synthesis of Microporous Silica Spheres" JOURNAL OF COLLOID AND INTERFACE SCIENCE, vol. 227, 2000, pages 302-315, XP002548294
- DONG KEE YI ET.AL.: "Nanoparticle Architectures Templated by SiO2/Fe2O3 Nanocomposites" CHEM. MATER., vol. 18, 2006, pages 614-619, XP002548295

## Description

### DOMAINE TECHNIQUE

La présente invention se rapporte au domaine des particules de silice et notamment des nanoparticules de silice sphériques et poreuses.

En effet, la présente invention a pour objet un procédé de préparation de particules de silice poreuses impliquant l'utilisation d'un agent porogène soluble dans l'eau tel qu'un dérivé de cyclodextrine ou un saccharide. Elle concerne également les particules de silice poreuses susceptibles d'être préparées par ce procédé et leurs différentes utilisations et applications.

### ÉTAT DE LA TECHNIQUE ANTÉRIEURE

Les nanoparticules sphériques et poreuses sont bien connues de l'art antérieur. Une porosité régulière peut être générée dans des matériaux à base de silice par un procédé sol-gel conventionnel. Cependant, une faible force mécanique, une faible conductivité thermique et l'hydrophobie sont des préoccupations significatives car ces matériaux sont de nature amorphe.

Récemment, plusieurs méthodes ont été établies afin de produire un matériel poreux de taille nanométrique ayant une structure régulière et poreuse.

Une de ces méthodes est l'utilisation de porogènes qui sont calcinés de façon à obtenir des pores de différentes tailles. Cela dit, cette méthode nécessite un matériel robuste au vu de la température optimale à atteindre afin de créer la porosité, température généralement supérieure à 500°C. Différentes applications de la méthode de calcination ont été rapportées dans la littérature, afin de produire une porosité nanométrique dans différentes particules telles que des aluminosilicates, des oxydes de cérium, des billes de silice, des oxydes de titane. Concernant les billes de silice, l'article de Vacassy et al. (2000) propose d'utiliser, comme agent porogène, soit du 3-aminopropyltriéthoxysilane qui est un trialcoxysilane présentant une fonction amine non-hydrolysable, soit du glycérol. Ce dernier agent porogène donne les meilleurs résultats en terme de morphologie et de distribution de taille des particules. Toutefois, les particules obtenues présentent une taille supérieure à 150 nm **[1]**.

En outre, des particules mésoporeuses de silice contenant du platine ont été produites, en utilisant un précurseur de platine comme agent porogène, et en nécessitant une calcination afin de produire la porosité requise. La préparation de microstructures poreuses utilisant des agents porogènes à base de silice a également été décrite.

L'article de Yi et al. (2006) propose de préparer différents types de nanoparticules à partir de nanoparticules présentant un coeur de Fe₂O₃ et une coquille de SiO₂ (ci-après désignées nanoparticules Fe₂O₃/SiO₂), ladite coquille ayant été synthétisée par microémulsion inverse **[2].** Ainsi, des nanoparticules Fe₂O₃/SiO₂ mésoporeuses sont obtenues, lorsque la microémulsion inverse met en oeuvre du tetraéthylorthosilicate (TEOS) et un agent porogène ultérieurement calciné, l'octadécyltrimethoxysilane (C18TMS). En variante, des nanoparticules de SiO₂ creuses sont obtenues par gravure du coeur métallique des nanoparticules Fe₂O₃/SiO₂. Une autre méthode d'introduction de porosité rapportée dans la littérature consiste donc en la gravure de nanoparticules.

La porosité peut aussi être formée grâce à l'utilisation d'un agent tensioactif. Ceci a notamment été mis en oeuvre pour former des particules de silicates mésoporeuses en utilisant le bromure de cetyltrimethoxyammonium (CTAB) comme agent tensioactif puis en l'extrayant des particules formées par des lavages acides **[3]**.

Des nanostructures ordonnées de silice hybride ont été établies avec une porosité induite par l'utilisation de porogènes thermiques et notamment de porogènes thermiques de type adamantane, greffés à des précurseurs de silice **[4]**.

Il existe donc un réel besoin pour un procédé de préparation de particules de silice poreuses, facile à mettre en oeuvre et n'impliquant pas d'étapes de traitement rude telles que calcination, gravure, corrosion ou traitement acide.

Les cyclodextrines ont déjà été rapportées comme agent porogène. Pour rappel, les cyclodextrines se composent d'oligosaccharides cycliques et sont capables de former des complexes avec des molécules hydrophobes. Il en résulte un grand nombre d'applications dans divers domaines tels que le transport d'agents actifs, la formulation pharmaceutique, la protection environnementale, la chimie supramoléculaire, la diffusion de parfums et, dans l'industrie alimentaire, pour la préparation de produits sans cholestérol. En effet, des produits pharmaceutiques lipophiles d'une taille compatible avec le coeur hydrophobe d'une cyclodextrine telle que la β -cyclodextrine présentant un diamètre interne et donc une cavité interne d'environ 7,5 Å peuvent former des complexes, résultant en une augmentation de la solubilité aqueuse de ces produits pharmaceutiques. L'efficacité *in vivo* est généralement maintenue quand ces produits pharmaceutiques sont administrés comme des complexes de cyclodextrines. Par ailleurs, il est important de mentionner que les cyclodextrines sont non-toxiques, ne dénaturent pas les protéines et n'interfèrent pas avec des réactions enzymatiques.

Concernant l'utilisation de cyclodextrines comme agent porogène, le brevet US 6,632,748 décrit la préparation de substances avec des nanopores de diamètre inférieur à 50 Å telles que des films minces et isolants. Cette préparation met en oeuvre des précurseurs de la matrice à base de silice et des cyclodextrines comme agent porogène et une étape de pyrolyse de cet agent porogène **[5]**.

De même, des γ-cyclodextrines ont été utilisées afin de créer une porosité dans des films MFI de silice/zéolite, le procédé mis en oeuvre lors de la préparation de ces films incluant une étape de calcination **[6]**. La préparation de microparticules poreuses de poly(lactide-co-glycolide) d'une taille supérieure à 1 µm par l'utilisation de β-cyclodextrines est également rapportée **[7]**.

Toutefois, les cyclodextrines n'ont jamais été utilisées en tant qu'agent porogène pour la préparation de particules de silice poreuses.

### EXPOSÉ DE L'INVENTION

La présente invention permet de remédier aux inconvénients et problèmes techniques listés ci-dessus. En effet, cette dernière propose un procédé de préparation de particules de silice poreuses en utilisant une famille particulière de porogènes i.e. des porogènes solubles dans l'eau dont l'élimination, essentielle à l'obtention de la porosité, ne nécessite pas de procédés rudes tels que calcination, gravure, corrosion ou traitement acide. Considérant l'hydrophilie naturelle des porogènes mis en oeuvre tels que la β-cyclodextrine ou du sucrose, ces derniers peuvent facilement être enlevés par des procédés considérés comme doux et peu énergétiques tels qu'une dialyse.

Les travaux des inventeurs ont mis en évidence que l'utilisation d'un porogène soluble dans l'eau tel que la β-cyclodextrine ou du sucrose permet de générer une porosité homogène dans les particules de silice et d'introduire une porosité régulière à l'échelle nanométrique dans des matériaux particulaires, sphériques à base de silice et notamment des matériaux nanoparticulaires dont la taille est avantageusement inférieure à 100 nm. En effet, l'élimination du porogène hydrophiliquement labile crée des pores ordonnés et uniformes possédant, de façon avantageuse, des diamètres inférieurs à 10 Å.

Une autre caractéristique de la présente invention se rapporte à l'augmentation de la surface spécifique des particules de silice, phénomène dû à l'élimination efficace du porogène, créant des cavités capables d'emprisonner un plus grand nombre de molécules cibles telles qu'énumérées ci-après.

De plus, dans le cadre de la présente invention, la surface des particules de silice obtenues par le procédé selon l'invention peut être fonctionnalisée permettant ainsi non seulement d'obtenir un matériau poreux (à cavités), mais également sensible et plus performant à la complexation d'ions métalliques par exemple. En effet, la surface et les pores peuvent être fonctionnalisés, à l'aide de précurseurs de silice fonctionnalisés par des agents de couplage silane NH₂ (aminopropyltriéthoxysilane ou APTES), SH (mercaptotriéthoxysilane), EDTA, etc... de façon à pouvoir améliorer la capacité de ces particules à emprisonner des éléments ciblés. De plus, cette fonctionnalisation peut déterminer l'influence désirée sur la polarité du matériau, et ainsi son influence sur l'affinité avec le solvant à utiliser dans le cas de l'application, c'est-à-dire, polaire, apolaire, etc... et donc de la dispersion désirée.

Ainsi, la présente invention concerne un procédé de préparation d'une particule de silice poreuse comprenant les étapes consistant à :
- préparer à partir d'une microémulsion inverse une particule de silice comprenant un agent porogène soluble dans l'eau, puis
- éliminer par dissolution ledit agent porogène.

Dans le cadre de la présente invention, la particule de silice comprenant ledit agent porogène soluble dans l'eau est préparée à partir d'une microémulsion inverse.

Par « microémulsion inverse », également appelée microémulsion « eau dans huile », on entend une suspension limpide, thermodynamiquement stable, de fines goutelettes d'un premier liquide polaire dans un second liquide non-polaire et donc non miscible avec le premier liquide.

Plus particulièrement, le procédé selon l'invention comprend les étapes suivantes :
a) préparer une microémulsion (Mₐ) du type eau dans huile contenant ledit agent porogène soluble dans l'eau,
b) ajouter, à la microémulsion (Mₐ) préparée à l'étape (a), un composé permettant l'hydrolyse d'un composé à base de silane,
c) ajouter, à la microémulsion (M_{b}) obtenue à l'étape (b), au moins un composé à base de silane,
d) ajouter à la microémulsion (M_{c}) obtenue à l'étape (c) un solvant permettant de déstabiliser ladite microémulsion,
e) récupérer les particules de silice comprenant ledit agent porogène, précipitées lors de l'étape (d), et
f) éliminer par dissolution l'agent porogène soluble dans l'eau des particules de silice récupérées lors de l'étape (e) afin d'obtenir des particules de silice poreuses.

Par « particule de silice poreuse », on entend dans le cadre de la présente invention une particule de silice notamment sphérique présentant des pores ordonnés et uniformes possédant des diamètres inférieurs à 10 Å. Les particules de silice selon l'invention présentent une taille moyenne inférieure ou égale à 100 nm, notamment inférieure ou égale à 80 nm, en particulier inférieure ou égale à 60 nm et, voire, de l'ordre de 40 nm (i.e. 40 ± 10 nm). Les particules de silice selon l'invention peuvent être éventuellement fonctionnalisées.

Par « agent porogène soluble dans l'eau », on entend dans le cadre de la présente invention un agent porogène miscible avec une solution aqueuse et dont seule une très faible quantité peut être extraite de ladite solution aqueuse dans un solvant organique non-polaire tel que du toluène ou de l'heptane.

Par « très faible quantité », on entend une quantité inférieure à 5%, notamment inférieure à 3% et, en particulier, inférieure à 1% en poids par rapport au poids total de porogène présent dans la solution aqueuse.

L'agent porogène soluble dans l'eau mis en oeuvre dans le cadre de la présente invention présente une solubilité dans l'eau, à 25°C, supérieure à 10 g/l et notamment supérieure à 15 g/l. Cette solubilité est de l'ordre de 18 g/l dans le cas des cyclodextrines **[8]**.

Avantageusement, l'agent porogène soluble dans l'eau utilisé dans le cadre de la présente invention est choisi dans le groupe constitué par les cyclodextrines, les dérivés de cyclodextrine, les monosaccharides, les oligosaccharides et les polysaccharides.

Par « cyclodextrines », on entend des composés formés par la liaison de n unités d'anhydroglucose, unies par des liaisons glucosidiques alpha-1,4 avec n représentant un entier compris entre 5 et 12 (bornes incluses) et notamment les cyclodextrines naturelles présentant 6, 7 et 8 unités d'anhydroglucose et appelées α-cyclodextrine, β-cyclodextrine et γ-cyclodextrine respectivement.

Par « dérivés de cyclodextrine », on entend des cyclodextrines dérivées des cyclodextrines telles que précédemment définies par des modifications chimiques et notamment par des substitutions. Ainsi, un dérivé de cyclodextrine peut présenter une ou plusieurs substitutions, identiques ou différentes, sur une ou plusieurs unités d'anhydroglucose. Toute substitution vise notamment à remplacer un groupement hydroxyle d'une unité d'anhydroglucose par un autre groupement tel qu'un halogène ; un maltosyle ; un glucosyle ; un phényle ; un benzyle ; un méthyle ; un hydroxypropyle ; un naphthyle ; un groupement alkyle, linéaire ou ramifié, éventuellement substitué, ayant de 1 à 20 atomes de carbone ; un groupement aryle, linéaire ou ramifié, éventuellement substitué, ayant de 1 à 20 atomes de carbone, avantageusement de 3 à 18 atomes de carbone et, plus particulièrement, de 6 à 15 atomes de carbone ; un groupement amine, éventuellement substitué, ayant de 1 à 20 atomes de carbone ; un groupement amide, éventuellement substitué, ayant de 1 à 20 atomes de carbone ; un groupement sulfonyle, éventuellement substitué, ayant de 1 à 20 atomes de carbone ; un groupement sulfoxyde, éventuellement substitué, ayant de 1 à 20 atomes de carbone ; un groupement thiol, éventuellement substitué, ayant de 1 à 20 atomes de carbone. Par « éventuellement substitué » on entend substitué par un halogène, un hydroxyle, un naphthyle, un benzyle, un alkyle ayant de 1 à 6 atomes de carbone.

A titre d'exemples non limitatifs de dérivés de cyclodextrines utilisables dans le cadre de la présente invention, on peut citer les dérivés de formule (I) décrits dans le brevet US 5,760,017 **[9]**.

Les monosaccharides avantageusement mis en oeuvre dans le cadre de la présente invention sont des oses présentant de 3 à 7 carbones tels que le glycéraldéhyde, le dihydroxyacétone, l'érythrose, le thréose, l'érythrulose, le désoxyribose, le ribose, l'arabinose, le xylose, le lyxose, le ribulose, le xylulose, l'allose, l'altrose, le glucose, le mannose, le gulose, l'idose, le galactose, le talose, le psicose, le fructose, le sorbose, le tagatose, le sédoheptulose et le mannoheptulose.

Les oligosaccharides et les polysaccharides avantageusement mis en oeuvre dans le cadre de la présente invention sont notamment :
- des diholosides ou oligoholosides tels que le tréhalulose, le saccharose (ou sucrose), le turanose, le maltulose, le leucrose, l'isomaltulose, le mélibiose, le lactulose, le lactose, le rutinose, l'inulobiose, le mannobiose, le tréhalose, le maltose, l'isomaltose, le sophorose, le laminaribiose et le cellobiose ; et
- des polyholosides, comme le glycogène, étant entendu que le poids moléculaire du porogène ne doit pas excéder notamment 15000, en particulier, 10000, et voire 4000, tous étant solubles dans l'eau.

Un porogène particulièrement adapté au procédé selon l'invention est la molécule de β -cyclodextrine qui a la forme d'un cône tronqué, constitué d'une cavité hydrophobe et de groupes hydroxyles activés. Cette molécule possède une grande affinité pour l'eau. Il est connu que la surface externe ainsi que le coeur des nanoparticules de silice possèdent des groupements hydroxyles et ces derniers peuvent interagir avec les molécules de β-cyclodextrine en formant des ponts hydrogène. Ainsi, ce phénomène assure une bonne miscibilité entre les molécules de β -cyclodextrine et les particules de silice en suspension. En introduisant des molécules de β -cyclodextrine et en faisant varier la concentration, la mésoporosité devient controlable.

L'étape (a) du procédé selon l'invention consiste donc à préparer une microémulsion (Mₐ) du type eau dans huile contenant l'agent porogène soluble dans l'eau. Toute technique permettant de préparer une telle microémulsion est utilisable dans le cadre de la présente invention. Ainsi, il est possible de :
- soit préparer une première microémulsion (M₁) du type eau dans huile et d'y incorporer ultérieurement l'agent porogène soluble dans l'eau pour obtenir la microémulsion (Mₐ) ;
- soit préparer la microémulsion (Mₐ) directement en mélangeant ensemble les différents composants et donc l'agent porogène soluble dans l'eau.

Avantageusement, l'étape (a) du procédé selon l'invention consiste à préparer une première microémulsion (M₁) dans laquelle est ultérieurement incorporé l'agent porogène soluble dans l'eau. Cette microémulsion (M₁) du type eau dans huile est obtenue en mélangeant ensemble au moins un tensioactif, au moins un co-tensioactif et au moins un solvant non-polaire ou faiblement polaire. Le tensioactif, le co-tensioactif et le solvant non-polaire ou faiblement polaire peuvent être mélangés en une fois ou être ajoutés les uns après les autres ou par groupe. Avantageusement, ils sont ajoutés les uns après les autres et, dans l'ordre suivant, tensioactif puis co-tensioactif puis solvant non-polaire ou faiblement polaire.

Le mélange est effectué sous agitation en utilisant un agitateur, un barreau magnétique, un bain à ultrasons ou un homogénéisateur, et peut être mis en oeuvre à une température comprise entre 10 et 40°C, avantageusement entre 15 et 30°C et, plus particulièrement, à température ambiante (i.e. 23°C ± 5°C) pendant une durée comprise entre 1 et 45 min, notamment entre 5 et 30 min et, en particulier, pendant 15 min.

Le (ou les) tensioactif(s) utilisable(s) dans le cadre de la présente invention vise(nt) à introduire des espèces hydrophiles dans un environnement hydrophobe et peu(ven)t être choisi(s) parmi les tensioactifs ioniques, les tensioactifs non-ioniques et leurs mélanges. Par « mélanges », on entend, dans le cadre de la présente invention, un mélange d'au moins deux tensioactifs ioniques différents, un mélange d'au moins deux tensioactifs non-ioniques différents ou un mélange d'au moins un tensioactif non-ionique et d'au moins un tensioactif ionique.

Un tensioactif ionique peut notamment se présenter sous forme d'une chaîne hydrocarbonée, chargée dont la charge est contre-balancée par un Contre-ion. A titre d'exemples non limitatifs de tensioactifs ioniques, on peut citer le bis (2-éthylhexyl sulfosuccinate) de sodium (AOT), le bromure de cétyltriméthylammonium (CTAB), le bromure de cétylpyridinium (CPB) et leurs mélanges.

Un tensioactif non-ionique utilisable dans le cadre de la présente invention peut être choisi dans le groupe constitué par les alcools polyéthoxylés, les phénols polyéthoxylés, les oléates, les laurates et leurs mélanges. A titre d'exemples non limitatifs de tensioactifs non-ioniques commerciaux, on peut citer les Triton X tels que le Triton X-100 ; les Brij tels que Brij-30 ; les Igepal CO tels que le Igepal CO-720 ; les Tween tels que le Tween 20 ; les Span tels que le Span 85.

Par « co-tensioactif », on entend dans le cadre de la présente invention un agent capable de faciliter la formation des microémulsions et les stabiliser. Avantageusement, ledit co-tensioactif est un composé amphiphile choisi dans le groupe constitué par un sulfate d'alkyle sodique à 8 à 20 atomes de carbone tel que le SDS (pour « Sodium Dodecyl Sulfate ») ; un alcool tel qu'un isomère de propanol, de butanol, de pentanol et d'hexanol ; un glycol et leurs mélanges.

Tout solvant non-polaire ou faiblement polaire est utilisable dans le cadre de la présente invention. Avantageusement, ledit solvant non-polaire ou faiblement polaire est un solvant organique non-polaire ou faiblement polaire et, notamment, choisi dans le groupe constitué par le n-butanol, l'hexanol, le cyclopentane, le pentane, le cyclohexane, le n-hexane, le cycloheptane, l'heptane, le n-octane, l'isooctane, l'hexadécane, l'éther de pétrole, le benzène, l'isobutyl-benzène, le toluène, le xylène, les cumènes, le diéthyl éther, le n-butyl acétate, l'isopropyl myristate et leurs mélanges.

Dans la microémulsion (M₁), le tensioactif est présent dans une proportion comprise entre 1 et 30 %, notamment entre 5 et 25 % et, en particulier, entre 10 et 20 % en volume par rapport au volume total de ladite microémulsion. Le co-tensioactif est également présent, dans la microémulsion (M₁), dans une proportion comprise entre 1 et 30 %, notamment entre 5 et 25 % et, en particulier, entre 10 et 20 % en volume par rapport au volume total de ladite microémulsion. Ainsi, le solvant non-polaire ou faiblement polaire est présent, dans la microémulsion. (M₁), dans une proportion comprise entre 40 et 98 %, notamment entre 50 et 90 % et, en particulier, entre 60 et 80 % en volume par rapport au volume total de ladite microémulsion.

Une fois la microémulsion (M₁) préparée, l'agent porogène soluble dans l'eau tel que précédemment défini est incorporé pour former la microémulsion (Mₐ) du type eau dans huile.

L'agent porogène soluble dans l'eau peut être ajouté sous forme solide, sous forme liquide ou en solution dans un solvant polaire. Quelle que soit la variante mise en oeuvre, un solvant polaire est rajouté à la microémulsion après l'incorporation dudit agent porogène soluble dans l'eau dans la microémulsion (M₁). Avantageusement, l'agent porogène soluble dans l'eau est ajouté à la microémulsion (M₁) en solution dans un solvant polaire puis du solvant polaire, identique ou différent du premier, est encore ajouté. Plus particulièrement, les deux solvants polaires utilisés sont identiques. L'ajout de l'agent porogène et éventuellement du solvant polaire peut être effectué sous agitation en utilisant un agitateur, un barreau magnétique, un bain à ultrasons ou un homogénéisateur.

Par « solvant polaire », on entend dans la cadre de la présente invention un solvant choisi dans le groupe constitué par l'eau, l'eau désionisée, l'eau distillée, acidifiées ou basiques, l'acide acétique, les solvants hydroxylés comme le méthanol et l'éthanol, les glycols liquides de faible poids moléculaire tels que l'éthylèneglycol, le diméthylsulfoxyde (DMSO), l'acétonitrile, l'acétone, le tétrahydrofurane (THF) et leurs mélanges.

Le solvant polaire (solvant polaire dans lequel l'agent porogène est en solution et/ou autre solvant polaire ultérieurement ajouté) est présent, dans la microémulsion (Mₐ), dans une proportion comprise entre 0,5 et 20 %, notamment entre 1 et 15 % et, en particulier, entre 2 et 10 % en volume par rapport au volume total de ladite microémulsion. L'agent porogène soluble dans l'eau est présent dans ce solvant polaire en une quantité comprise entre 0,05 et 10 %, notamment entre 0,1 et 5 % et, en particulier, entre 0,2 et 1 % en volume par rapport au volume total de solvant polaire.

L'étape (b) du procédé selon l'invention vise à prévoir l'hydrolyse d'un composé à base de silane en ajoutant à la microémulsion (Mₐ) un composé permettant cette hydrolyse, la microémulsion (M_{b}) ainsi obtenue étant une microémulsion eau dans huile.

Par « composé permettant l'hydrolyse du composé à base de silane », on entend dans le cadre de la présente invention un composé choisi dans le groupe constitué par l'ammoniac, l'hydroxyde de potassium (KOH), l'hydroxyde de lithium (LiOH) et l'hydroxyde de sodium (NaOH) et, avantageusement, une solution d'un tel composé dans un solvant polaire, identique ou différent, au solvant polaire mis en oeuvre lors de l'étape (a). Le composé permettant l'hydrolyse du composé à base de silane est, plus particulièrement, de l'ammoniac ou une solution d'ammoniac dans un solvant polaire. En effet, l'ammoniac agit comme réactif (H₂O) et comme catalyseur (NH₃) de l'hydrolyse du composé à base de silane.

Le composé choisi dans le groupe constitué par l'ammoniac, l'hydroxyde de potassium (KOH), l'hydroxyde de lithium (LiOH) et l'hydroxyde de sodium (NaOH), en solution dans le solvant polaire est présent dans une proportion comprise entre 5 et 50 %, notamment entre 10 et 40 % et, en particulier, entre 20 et 30 % en volume par rapport au volume total de ladite solution. De plus, ladite solution est présente dans une proportion comprise entre 0,05 et 20 %, notamment entre 0,1 et 10 % et, en particulier, entre 0,5 et 5 % en volume par rapport au volume total de la microémulsion (M_{b}).

L'étape (b) peut être mise en oeuvre sous agitation en utilisant un agitateur, un barreau magnétique, un bain à ultrasons ou un homogénéisateur, et à une température comprise entre 10 et 40°C, avantageusement entre 15 et 30°C et, plus particulièrement, à température ambiante (i.e. 23°C ± 5°C) pendant une durée comprise entre 6 et 48 h, notamment entre 12 et 36 h et, en particulier, pendant 24 h.

L'étape (c) consiste à incorporer dans la microémulsion (M_{b}) ainsi obtenue un composé à base de silane ou plusieurs composés à base de silane, identiques ou différents, qui donnera(ont) par réaction sol-gel la silice des particules de silice selon l'invention. L'incorporation dans la microémulsion (M_{b}) du (ou des) composé(s) à base de silane pour obtenir la microémulsion (M_{c}) du type eau dans huile est effectuée sous agitation en utilisant un agitateur, un barreau magnétique, un bain à ultrasons ou un homogénéisateur, et peut être mise en oeuvre à une température comprise entre 10 et 40°C, avantageusement entre 15 et 30°C et, plus particulièrement, à température ambiante (i.e. 23°C ± 5°C) pendant une durée comprise entre 5 min et 2 h, notamment entre 15 min et 1 h et, en particulier, pendant 30 min.

Avantageusement, ledit (ou lesdits) composé(s) à base de silane est(sont) un alkysilane ou un alcoxysilane. Plus particulièrement, ledit (ou lesdits) composé(s) à base de silane est(sont) de formule générale SiR₁R₂R₃R₄ dans laquelle R₁, R₂, R₃ et R₄ sont, indépendamment les uns des autres, un hydrogène ; un halogène ; un groupe amine ; un groupe amide ; un groupe acyle ; un groupe vinyle ; un groupe hydroxyle ; un groupe epoxy ; un groupe isocyanate ; un groupe carboxyle ; un groupe thiol (ou mercapto) ; un groupe acryloxy tel qu'un groupe méthacryloxy ; un groupe alkyle, linéaire ou ramifié, éventuellement substitué, de 1 à 12 carbones, notamment de 1 à 6 atomes de carbone ; un groupe aryle, linéaire ou ramifié, éventuellement substitué, de 4 à 15 carbones, notamment de 4 à 10 atomes de carbone ou un groupe alcoxyle de formule -OR₆ avec R₆ représentant un groupe alkyle tel que précédemment défini. Par « éventuellement substitué », on entend, dans le cadre des groupes alkyle et aryle des composés à base de silane, substitué par un halogène, un groupe amine, un groupe amide, un groupe acyle, un groupe vinyle, un groupe hydroxyle, un groupe epoxy, un groupe isocyanate, un groupe carboxyle, un groupe thiol (ou mercapto) ou un groupe acryloxy et notamment un groupe méthacryloxy.

Le composé à base de silane est, plus particulièrement, choisi parmi le tétraéthoxysilane (TEOS, Si(OC₂H₅)₄), le diméthylsilane (DMSi, Si(CH₃)₂H₂), le phényltriéthoxysilane (PTES, C₆H₅Si(OC₂H₅)₃), le n-octyltriéthoxysilane (CH₃(CH₂)₇Si(OC₂H₅)₃), le n-octadécyltriéthoxysilane (CH₃(CH₂)₁₇Si(OC₂H₅)₃), le diméthyldiméthoxysilane (DMDMOS, Si(CH₃)₂(OCH₃)₂), le 3-mercaptopropyltriméthoxysilane (SH(CH₂)₃Si(OCH₃)₃), le mercaptotriéthoxysilane (SH-Si(OC₂H₅)₃), l'aminopropyltriéthoxysilane (NH₂(CH₂)₃Si(OC₂H₅)₃) et leurs mélanges. De façon plus particulière, le composé à base de silane est le tétraéthoxysilane (TEOS, Si(OC₂H₅)₄).

En vue de la fonctionnalisation de la surface et des pores des particules de silice obtenues selon l'invention, le composé à base de silane mis en oeuvre peut être un mélange contenant moins de 20% et notamment de 5 à 15% d'un silane préfonctionnalisé par rapport à la quantité totale de composés à base de silane. A titre d'exemple, un mélange contenant du TEOS et de 5 à 15% de mercaptotetraéthoxysilane peut être utilisé pour la préparation de particules de silice poreuses selon l'invention et fonctionnalisées par des groupements thiol.

Dans la microémulsion (M_{c}), le composé à base de silane est présent dans une proportion comprise entre 0,05 et 20 %, notamment entre 0,1 et 10 % et, en particulier, entre 0,5 et 5 % en volume par rapport au volume total de ladite microémulsion.

L'étape (d) du procédé selon l'invention vise à précipiter les particules de silice par addition d'un solvant qui ne dénature pas la structure des nanoparticules mais qui déstabilise ou dénature la microémulsion (M_{c}) obtenue à l'étape (c).

Avantageusement, le solvant mis en oeuvre est un solvant polaire tel que précédemment défini. Un solvant polaire particulier à mettre en oeuvre lors de l'étape (d) est choisi dans le groupe constitué par l'éthanol, l'acétone et le THF. Ainsi, est ajouté, à la microémulsion (M_{c}), un volume de solvant identique ou supérieur au volume de ladite microémulsion, notamment supérieur d'un facteur 1,5, en particulier, supérieur d'un facteur 2, et voire supérieur d'un facteur 3.

Toute technique permettant de récupérer les particules de silice comprenant ledit agent porogène, précipitées lors de l'étape (d) peut être mise en oeuvre lors de l'étape (e) du procédé selon l'invention. Avantageusement, cette étape (e) met en oeuvre une ou plusieurs étapes, identiques ou différentes, choisies parmi les étapes de centrifugation, de sédimentation et de lavages. La (ou les) étape(s) de lavage est(sont) effectuée(s) dans un solvant polaire tel que précédemment défini, ci-après désigné solvant de lavage. Lorsque l'étape de récupération met en oeuvre plusieurs lavages, un même solvant polaire est utilisé pour plusieurs voire pour tous les lavages ou plusieurs solvants polaires différents sont utilisés à chaque lavage. Concernant une (ou plusieurs) étape(s) de centrifugation, elle(s) peu(ven)t être mise(s) en oeuvre en centrifugeant les particules de silice notamment dans un solvant de lavage à température ambiante, à une vitesse comprise entre 4000 et 8000 rpm et, en particulier, de l'ordre de 6000 rpm (i.e. 6000 ± 500 rpm) et ce, pendant une durée comprise entre 5 min et 2 h, notamment entre 10 min et 1 h et, en particulier, pendant 15 min.

L'élimination de l'agent porogène soluble dans l'eau peut être effectuée, notamment lors de l'étape (f) du procédé selon l'invention par toute technique connue de l'homme du métier favorisant la solubilisation ou la dissolution dudit agent porogène.

Avantageusement, cette étape (f) consiste à mettre les particules de silice comprenant un agent porogène soluble dans l'eau au contact d'un très large volume d'eau. Par « très large volume », on entend un volume supérieur d'un facteur 50, notamment d'un facteur 500 et, en particulier, d'un facteur 1000 au volume de particules de silice comprenant un agent porogène soluble dans l'eau, récupérées après l'étape (e) du procédé selon l'invention. L'étape (f) peut être une étape de dialyse, les nanoparticules de silice comprenant un agent porogène soluble dans l'eau étant séparées du volume d'eau par une membrane de cellulose, du type Zellu trans® (société Roth). Alternativement, on peut prévoir une étape d'ultrafiltration à la place de l'étape de dialyse, via une membrane en polyethersulfone. L'étape (f) peut, de plus, être mise en oeuvre sous agitation en utilisant un agitateur, un barreau magnétique, un bain à ultrasons ou un homogénéisateur, à une température comprise entre 0 et 30°C, avantageusement entre 2 et 20°C et, plus particulièrement, à froid (i.e. 6°C ± 2°C) et ce, pendant une durée comprise entre 30 h et 15 j, notamment entre 3 j et 10 j et, en particulier, pendant 1 semaine.

Il convient de remarquer que, dès les étapes (d) et/ou (e) du procédé selon l'invention, l'agent porogène soluble dans l'eau peut commencer à être éliminé des particules de silice le comprenant et ce, notamment si le solvant mis en oeuvre dans ce (ou ces) étape(s) est aqueux.

La présente invention concerne également la microémulsion (M_{c}) susceptible d'être mise en oeuvre dans le cadre du procédé selon l'invention. Cette microémulsion de type eau dans huile comprend :
- au moins un tensioactif, notamment tel que précédemment défini,
- au moins un co-tensioactif, notamment tel que précédemment défini,
- au moins un solvant non-polaire ou faiblement polaire, notamment tel que précédemment défini,
- au moins un solvant polaire, notamment tel que précédemment défini,
- au moins un porogène soluble dans l'eau, notamment tel que précédemment défini,
- au moins un composé à base de silane, notamment tel que précédemment défini, et
- au moins un composé capable d'hydrolyser ledit composé à base de silane, notamment tel que précédemment défini.

Avantageusement, la microémulsion de type eau dans huile objet de la présente invention comprend :
- au moins un tensioactif en une quantité comprise entre 1 et 30 %, notamment entre 5 et 25 % et, en particulier, entre 10 et 20 % ;
- au moins un co-tensioactif en une quantité comprise entre 1 et 30 %, notamment entre 5 et 25 % et, en particulier, entre 10 et 20 % ;
- au moins un solvant non-polaire ou faiblement polaire en une quantité comprise entre 40 et 95 %, notamment entre 50 et 90 % et, en particulier, entre 60 et 80 % ;
- au moins un solvant polaire en une quantité comprise entre 0,5 et 20 %, notamment entre 1 et 15 % et, en particulier, entre 2 et 10 % ;
- au moins un porogène soluble dans l'eau en une quantité comprise entre 0,001 et 1 %, notamment entre 0,005 et 0,1 % et, en particulier, entre 0,001 et 0,05 % ;
- au moins un composé à base de silane en une quantité comprise entre 0,05 et 20 %, notamment entre 0,1 et 10 % et, en particulier, entre 0,5 et 5 % ; et
- au moins un composé capable d'hydrolyser ledit composé à base de silane en une quantité comprise entre 0,01 et 5 %, notamment entre 0,05 et 1 % et, en particulier, entre 0,1 et 0,5 %.

La présente invention concerne, de plus, une particule de silice poreuse susceptibe d'être préparée par le procédé de la présente invention. Cette particule est une particule de silice poreuse telle que précédemment définie.

La particule de silice poreuse selon l'invention présente une porosité homogène. Les pores sont de même taille, cette taille étant fonction du porogène employé. La particule de silice poreuse selon l'invention présente des pores ordonnés et uniformes possédant des diamètres inférieurs à 10 Å et une taille moyenne inférieure ou égale à 100 nm, notamment inférieure ou égale à 80 nm, en particulier inférieure ou égale à 60 nm et, voire, de l'ordre de 40 nm.

La présente invention concerne enfin l'utilisation d'une particule de silice poreuse selon l'invention dans des domaines tels que la catalyse, l'imprimerie, la filtration, la peinture, la polymérisation, l'échange thermique, la chimie des matériaux, le raffinage d'hydrocarbures, les absorbants, l'industrie alimentaire, le transport d'agents actifs, les biomolécules, les produits pharmaceutiques, les composés bioélectroniques et les dispositifs électroniques, optiques, de semiconducteurs et de capteurs.

Plus particulièrement, la présente invention concerne l'utilisation d'une particule de silice poreuse selon la présente invention pour la séparation, la détection, la catalyse et la complexation d'un produit d'intérêt.

Par « produit d'intérêt », on entend dans le cadre de la présente invention, un produit naturel, artificiel ou synthétique, organique ou inorganique et notamment choisi dans le groupe constitué par les produits chimiques, les ions métalliques, les composés inorganiques, les molécules organiques ou inorganiques, les médicaments, les peptides, les protéines, les acides nucléiques (ADN simple-brin ou double brin et ARN), les polymères artificiels ou naturels, les produits alimentaires ou pharmaceutiques, les virus, les bactéries, les cellules et d'autres entités.

Par « produit chimique », on entend plus particulièrement dans l'invention un produit choisi dans le groupe constitué par les phthalocyanines (substituées en positions périphériques, et/ou non-périphériques), les porphyrines (substituées en positions méso et/ou périphériques (β)), des colorants et fluorophores (cardiogreen, naphthalocyanine, fluorescéine, rhodamine B, oxazine 750 perchlorate, IR 140, IR 676, HITC, 1,1',3,3,3'3'-hexamethylindotricarbocyanine perchlorate, rhodamine 19 perchlorate, diamine green B, propyl astra blue iodide, nile blue perchlorate, IR 783, IR 806, oxazine 170 perchlorate).

La présente invention concerne, tout particulièrement, l'utilisation d'une particule de silice poreuse selon la présente invention pour la complexation et l'emprisonnement d'ions métalliques, éventuellement sous forme de sels ou de colloides, tels que or, argent, cuivre, strontium, plomb, cadmium, chrome, fer et zinc, d'alcalins, d'alcalino-terreux, d'actinides et de lanthanides.

D'autres caractéristiques et avantages de la présente invention apparaîtront encore à l'homme du métier à la lecture des exemples ci-dessous donnés à titre illustratif et non limitatif, en référence aux figures annexées.

### BRÈVE DESCRIPTION DES DESSINS

La Figure 1 présente les spectres d'excitation et d'émission de la solution aqueuse contenant des nanoparticules de silice marquées avec le perchlorate de Nile Blue A et préparées conformément au procédé de l'invention.

La Figure 2 présente la distribution en taille obtenue pour deux expériences indépendantes avec des nanoparticules poreuses, préparées selon le procédé de la présente invention et complexées avec le IR 806.

La Figure 3 est une image de MET d'une dispersion aqueuse de nanoparticules de silice poreuses, préparées selon le procédé de l'invention et complexées avec de l'argent (Ag).

La Figure 4 présente des analyses élémentaires par spectrométrie X d'énergie dispersive (EDSX) effectuées sur les nanoparticules sphériques de la dispersion présentée à la Figure 3, présentes hors agglomérat (Figure 4A) et dans un agglomérat (Figure 4B).

La Figure 5 est une image de MET d'une dispersion aqueuse de nanoparticules de silice poreuses, préparées selon le procédé de l'invention et complexées avec du strontium (Sr).

La Figure 6 présente des analyses élémentaires par spectrométrie X d'énergie dispersive (EDSX) effectuées sur les nanoparticules sphériques de la dispersion présentée à la Figure 5, présentes hors agglomérat (Figure 6A) et dans un agglomérat (Figure 6B).

### EXPOSÉ DÉTAILLÉ DE MODES DE RÉALISATION PARTICULIERS

### 1. Synthèse de particules de silice poreuses selon le procédé de l'invention.

Dans le procédé de cet exemple, la β-cyclodextrine hydrophile est dissoute dans de l'eau avant d'être injectée et distribuée uniformément *in situ* dans la microémulsion inverse à température ambiante antérieurement à l'ajout du tetraethoxysilane (TEOS, précurseur de la silice). Après hydrolyse du TEOS avec de l'ammoniac aqueux NH₄OH, et différentes étapes de lavage des particules de silice, ces dernières (∼ 40 nm de diamètre) sont dispersées dans l'eau et passées en dialyse à froid dans de l'eau distillée et déionisée afin d'éliminer la β-cyclodextrine destinée à constituer la porosité de ces nano-objets.

Plus particulièrement, une microémulsion est générée en ajoutant, dans cet ordre, les produits chimiques suivants, le tensioactif Triton X100 (16,8 mL), le co-tensioactif n-hexanol (16,4 mL), le solvant organique cyclohexane (75,04 mL). La solution est alors agitée à température ambiante pendant 15 minutes.

Ensuite, l'agent porogène β -cyclodextrine en solution aqueuse est ajouté (2%, 16 mg dans 800 µL d'eau, M = 1135,01 gmol⁻¹) suivi par de l'eau (4 mL). L'ammoniac aqueux à 25% (1000 µL) est injecté dans cette microémulsion. La microémulsion résultante est agitée à température ambiante pendant 30 minutes. Le dérivé silicone TEOS (pour « tetraethoxysilane », 900 µL, 40,32 x 10⁻⁴ mol, d = 0,934, M = 208,33 gmol⁻¹) est à son tour additionné. L'hydrolyse du TEOS est initiée par l'ammoniac aqueux déjà présent et le mélange réactionnel est agité pendant 24 heures à température ambiante.

La microémulsion est déstabilisée par l'addition d'éthanol (200 mL) et les billes de silice sont lavées trois fois à l'éthanol et une fois à l'eau, chaque lavage étant suivi par une sédimentation à la centrifugeuse (15 minutes à 6000 rpm).

Après l'étape de lavage, l'élimination du porogène dont la solubilité dans l'eau est de l'ordre de 18 g/L soit approximativement de 16,5 mM est achevée par dialyse dans l'eau (5 L) sous agitation magnétique pendant une semaine. Les nanoparticules de silice poreuses dispersées dans l'eau (400 mL) sont alors caractérisées par analyse au Zetasizer et en microscope électronique en transmission (MET).

### 2. Complexation des particules de silice poreuses obtenues par le procédé selon l'invention.

### 2.1. Complexation avec le fluorophore perchlorate de Nile Blue A.

Une solution aqueuse de nanoparticules de silice poreuses (10 mL) préparées selon le procédé de l'invention est diluée avec de l'eau (19 mL) et gardée sous vive agitation magnétique.

Ensuite, une solution aqueuse de perchlorate de Nile Blue A (0,41 mg dans 1 mL d'eau, C = 10⁻³ M, M = 417,85 gmol⁻¹, n = 10⁻⁶ mol) est ajoutée au mélange réactionnel qui est agité à température ambiante pendant 24 heures. Les billes de silice complexées avec le fluorophore sont alors lavées trois fois à l'éthanol et une fois à l'eau, chaque lavage étant suivi par une sédimentation à la centrifugeuse (15 minutes à 6000 rpm).

### 2.2. Complexation avec des fluorophores et des métaux.

Le Tableau 1 ci-dessous reprend les différents fluorophores et métaux introduits dans les particules de silice poreuses préparées selon le procédé de l'invention.

**Tableau 1**

| | Poids Moléculaires / gmol⁻¹ | Couleurs | λₘₐₓ / nm (solvant) | Expt. |
|---|---|---|---|---|
| ***Colorants et fluorophores*** | | | | |
| NPcSi(OH)₂¹ | 774,88 | Vert foncé | 760 (THF) | 20 |
| Cardiogreen | 774,96 | Vert | 777 (Eau) | 36 |
| Propyl Astra Bue Iodide² | 1408,75 | Bleu | 336, 614 (Eau) | 66 |
| Porphyrine³ | 790,8 | Rouge | 411 (Eau) | 67 |
| IR 806 | 735,33 | Vert | 802 (Eau) | 68 |
| Nile Blue A perchlorate | 417,85 | Bleu | 638 (Eau) | 69 |
| IR 140 | 779,21 | Incolore | 827 (Eau) | 70 |
| HITC⁴ | 536,5 | Vert pâle | 734 (Eau) | 71 |
| 2-(2-hydroxy-5-methylphenyl)benzotriazole⁵ | 225,25 | Incolore | 290 (THF) | 72 |
| Alexa Fluor 680-C₂ maléimide⁶ | ∼1000 | Bleu pâle | 686 (Eau) | 39 |

| ***Métaux*** | | | | |
|---|---|---|---|---|
| PbNO₃ | 331,21 | Incolore | - | 35 |
| SrCl₂ | 158,53 | Incolore | - | 32 |
| AgNO₃ | 169,87 | Incolore | - | 25+26 |

| | | | | |
|---|---|---|---|---|
| ¹ Dihydroxyde de silicone 2,3-naphthalocyanine ² Famille des Phthalocyanines ³ Acide *Meso*-Tetraphenylpozphine-4,4',4",4"'-tetracarboxylique ⁴ Iodure de 1,1',3,3,3',3'-hexamethylindotricarbocyanine ⁵ Absorbeur UV ⁶ Marqueur de protéines | | | | |

### 3. Caractérisations des particules de silice complexées obtenues : analyses MET, Zetasizer ou Fluorescence.

### 3.1. Expt 69 (Tableau 1).

Les nanoparticules de silice marquées avec le perchlorate de Nile Blue A préparées conformément au procédé du point 2.1 ci-dessus et dispersées dans l'eau sont alors caractérisées par analyse au Zetasizer, en microscope électronique en transmission (MET) et par mesure de fluorescence.

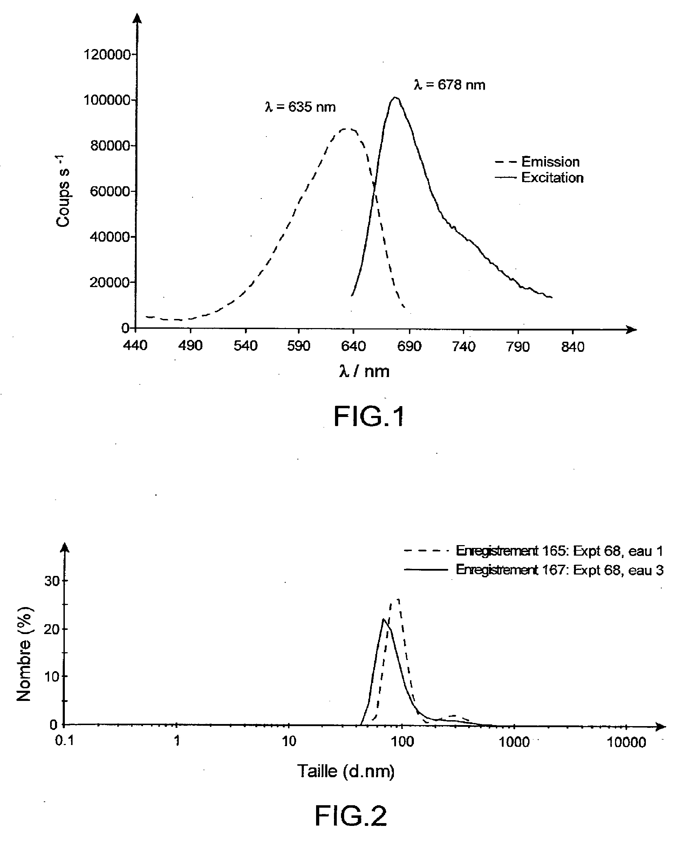

La Figure 1 présente les spectres d'excitation et d'émission de la solution aqueuse contenant ces nanoparticules de silice marquées.

### 3.2. Expt 68 (Tableau 1).

Les nanoparticules sphériques et poreuses préparées selon le procédé décrit au point 1 ci-dessus sont complexées avec le colorant IR 806.

La taille des nanoparticules complexées avec le IR 806 et dispersées dans l'eau est analysée. La Figure 2 présente la distribution en taille obtenue pour deux essais indépendants, la taille moyenne mesurée étant respectivement de 85,24 nm et 68,06 nm.

### 3.3. Expt 25 (Tableau 1).

Une dispersion aqueuse de nanoparticules de silice contenant du Ag est préparée en utilisant comme agent porogène du sucrose.

Dans le procédé de cet exemple, le sucrose hydrophile est dissous dans de l'eau avant d'être injecté et distribué uniformément *in situ* dans la microémulsion inverse à température ambiante antérieurement à l'ajout du tétraéthoxysilane (TEOS, précurseur de la silice). Après hydrolyse du TEOS avec de l'ammoniac, et différentes étapes de lavage des particules de silice, ces dernières (∼ 60 nm de diamètre) sont dispersées dans l'eau et passées en dialyse à froid dans de l'eau distillée et déionisée afin d'éliminer le sucrose destiné à constituer la porosité de ces nano-objets.

Plus particulièrement, une microémulsion a été générée en ajoutant, dans cet ordre, les produits chimiques suivants, le tensioactif Triton X100 (5 mL), le co-tensioactif n-hexanol (5 mL), le solvant organique cyclohexane (20 mL). La solution est alors agitée à température ambiante pendant 15 minutes.

Ensuite, l'agent porogène sucrose en solution aqueuse est ajouté (0.5%, 5 mg dans 200 µL d'eau, M = 342.30 gmol⁻¹ suivi par de l'eau (1 mL). L'ammoniac aqueux à 25% (125 µL) est injecté dans cette microémulsion. La microémulsion résultante est agitée à température ambiante pendant 30 minutes. Le dérivé silicone TEOS (pour « tétraéthoxysilane », 176 µL, 8 x 10⁻⁴ mol, d = 0,934, M = 208,33 gmol⁻¹) est à son tour additionné. L'hydrolyse du TEOS est initiée par l'ammoniac aqueux déjà présent et le mélange réactionnel est agité pendant 24 heures à température ambiante. La microémulsion est déstabilisée par l'addition d'éthanol (200 mL) et les billes de silice sont lavées trois fois à l'éthanol et une fois à l'eau, chaque lavage étant suivi par une sédimentation à la centrifugeuse (15 minutes à 6000 rpm).

Après l'étape de lavage, l'élimination du porogène dont la solubilité dans l'eau est de l'ordre de 22,15 g/L à 20°C est achevée par dialyse dans l'eau (5 L) sous agitation magnétique pendant une semaine. Les nanoparticules de silice poreuses dispersées dans l'eau (500 mL) sont alors caractérisées par analyse au Zetasizer et en microscope électronique en transmission (MET).

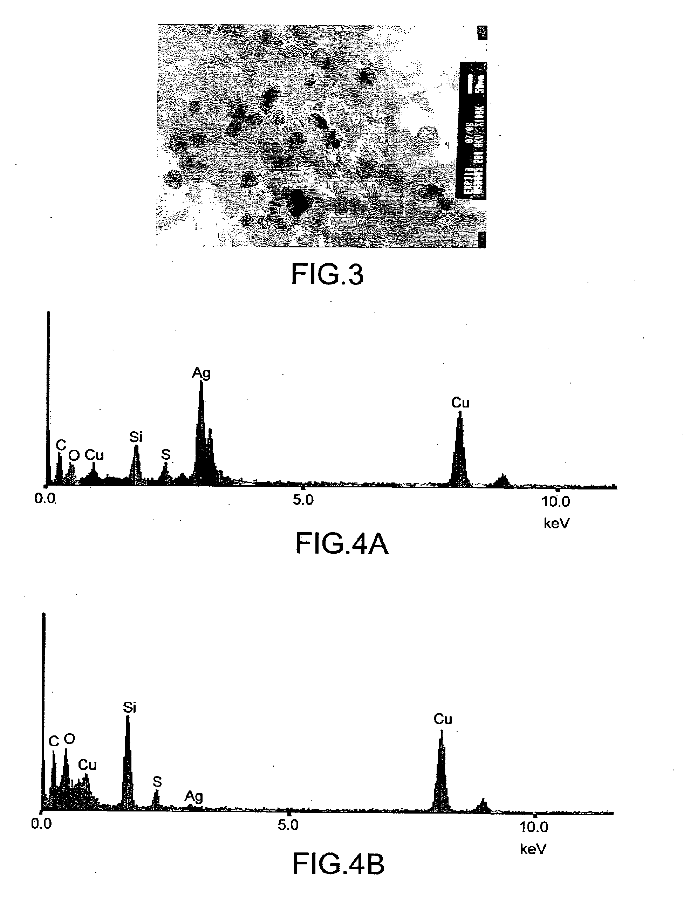

L'image de MET montre la microstructure de l'échantillon Expt 25 (Figure 3). Nous observons des nanoparticules sphériques situées dans un agglomérat et hors agglomérat. La taille de ces nanoparticules se situe entre 30 et 80 nm.

Des analyses élémentaires par spectrométrie X d'énergie dispersive (EDSX) ont été effectuées sur ces nanoparticules sphériques (Figure 4A). Les nanoparticules sphériques situées hors agglomérat sont riches en Ag. Elles contiennent également des éléments en Si et en S. Le Tableau 2 ci-dessous reprend les valeurs numériques obtenues à partir de l'analyse correspondant à la Figure 4A.

**Tableau 2**

| **Elm** | **CL value** | **Norm wt%** | **Prec.** | **Atomic %** | **Line** |
|---|---|---|---|---|---|
| Si | 1.0000 | 6.41 | 0.98 | 19.62 | K line |
| S | 1.1690 | 3.04 | 0.83 | 8.16 | K line |
| Ag | 4.5206 | 90.55 | 7.16 | 72.22 | L line |

Des analyses par EDSX ont été également effectuées sur ces agglomérats (Figure 4B). Ces derniers sont riches en Si et contiennent peu de Ag. Le Tableau 3 ci-dessous reprend les valeurs numériques obtenues à partir de l'analyse correspondant à la Figure 4B.

**Tableau 3**

| **Elm** | **CL value** | **Norm wt%** | **Prec.** | **Atomic %** | **Line** |
|---|---|---|---|---|---|
| Si | 1.0000 | 72.12 | 6.56 | 81.57 | K line |
| S | 1.1690 | 14.67 | 3.56 | 14.54 | K line |
| Ag | 4.5206 | 13.21 | 8.19 | 3.89 | L line |

### 3.4. Expt 32 (Tableau 1).

Une dispersion aqueuse de nanoparticules de silice poreuses, fonctionnalisées avec des groupements thiols (SH) via l'ajout de 5 à 15% de mercaptotriethoxysilane avec le TEOS, contenant du strontium.

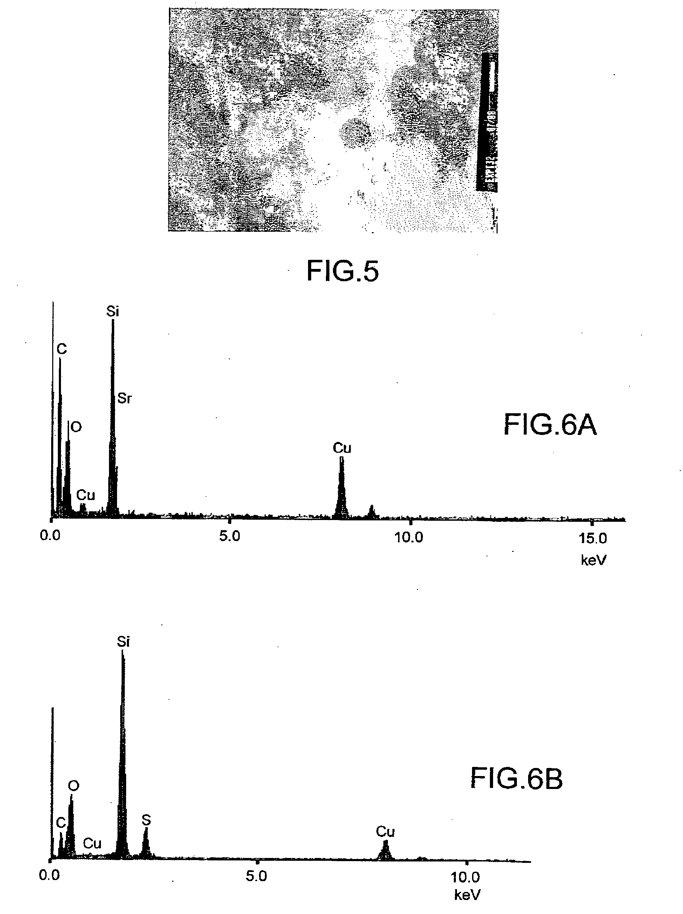

L'image de MET montre la microstructure de l'échantillon Expt 32 (Figure 5). Nous observons des nanoparticules sphériques situées dans un agglomérat et hors agglomérat. La taille de ces nanoparticules fait environ 100 nm.

Des analyses élémentaires par spectrométrie X d'énergie dispersive (EDSX) ont été effectuées sur ces nanoparticules sphériques (Figure 6A). Les nanoparticules sphériques situées hors agglomérat sont très riches en élément Si et parfois contiennent un élément en Sr. Le Tableau 4 ci-dessous reprend les valeurs numériques obtenues à partir de l'analyse correspondant à la Figure 6A.

**Tableau 4**

| **Elm** | **CL value** | **Norm wt%** | **Prec.** | **Atomic %** |
|---|---|---|---|---|
| Si | 1.0000 | 92.90 | 9.57 | 97.61 |
| Sr | 4.7693 | 7.10 | 6.00 | 2.39 |

Des analyses par EDSX ont été également effectuées sur ces agglomérats (Figure 4B). Par rapport aux particules sphériques, l'agglomérat a un pourcentage élevé en élément S. En effet, les fonctions thiol sont plus concentrées sur les billes nanométriques et confèrent une plus grande complexation. Le Tableau 5 ci-dessous reprend les valeurs numériques obtenues à partir de l'analyse de la Figure 6B.

**Tableau 5**

| **Elm** | **CL value** | **Norm wt%** | **Prec.** | **Atomic %** |
|---|---|---|---|---|
| Si | 1.0000 | 87.65 | 4.54 | 89.01 |
| Sr | 4.7693 | 0.00 | 0.00 | 0.00 |
| S | 1.1690 | 12.35 | 1.97 | 10.99 |

### RÉFÉRENCES BIBLIOGRAPHIQUES

1 Vacassy, R.; Flatt, R.J.; Hofmann, H.; Choi, K.S.; Singh, R.K. J. of Colloid. and Interface Science, 2000, 227, 302-315.
2 Yi, D.K.; Lee, S.S.; Papaefthymiou, G.C.; Ying, J.Y. Chem. Mater., 2006, 18, 614-619.
3 Lim, M.H.; Blanford, C.F.; Stein, A. Chem. Mater., 1998, 10, 467-470.
4 Cho, W.; Cha, B.; Kim, J.M.; Char, K. In "The 231st ACS National Meeting", Nano-structured Polymers: Atlanta, GA, March 26-30, 2006, Poly 214.
5 Brevet US 6 632 748 au nom de Samsung Electronics et publié le 14 octobre 2003.
6 Li, S.; Li, Z.; Yan, Y. Adv. Mater., 2003, 15, 1528-1531.
7 Kwon, M.J.; Bae, J.H.; Kim, J.J.; Na, K.; Lee, E.S. International Journal of Pharmaceutics, 2007, 333, 5-9.
8 Sabadini, E.; Cosgrove, T.; do Carmo Egidio, F. Carbohydr. Res., 2006, 341, 270-274.
9 Brevet US 5 760 017 au nom du Commissariat à l'Energie Atomique et publié le 2 juin 1998.

## Revendications

1. Procédé de préparation d'une particule de silice poreuse comprenant les étapes consistant à :
- préparer, à partir d'une microémulsion inverse, une particule de silice comprenant un agent porogène soluble dans l'eau, puis
- éliminer par dissolution ledit agent porogène.

2. Procédé selon la revendication 1, **caractérisé en ce qu'**il comprend les étapes suivantes :
a) préparer une microémulsion (Mₐ) du type eau dans huile contenant ledit agent porogène soluble dans l'eau,
b) ajouter à la microémulsion (Mₐ) préparée à l'étape (a) un composé permettant l'hydrolyse d'un composé à base de silane,
c) ajouter à la microémulsion (M_{b}) obtenue à l'étape (b) au moins un composé à base de silane,
d) ajouter à la microémulsion (M_{c}) obtenue à l'étape (c) un solvant permettant de déstabiliser ladite microémulsion,
e) récupérer les particules de silice comprenant ledit agent porogène, précipitées lors de l'étape (d), et
f) éliminer par dissolution l'agent porogène soluble dans l'eau des particules de silice récupérées lors de l'étape (e) afin d'obtenir des particules de silice poreuses.

3. Procédé selon la revendication 1 ou 2, **caractérisé en ce que** ledit agent porogène soluble dans l'eau est choisi dans le groupe constitué par les cyclodextrines, les dérivés de cyclodextrine, les monosaccharides, les oligosaccharides et les polysaccharides.

4. Procédé selon la revendication 2 ou 3, **caractérisé en ce que** ladite étape (a) consiste à préparer une première microémulsion (M₁) dans laquelle est ultérieurement incorporé l'agent porogène soluble dans l'eau.

5. Procédé selon la revendication 4, **caractérisé en ce que** ladite microémulsion (M₁) est obtenue en mélangeant ensemble au moins un terisioactif, au moins un co-tensioactif et au moins un solvant non-polaire ou faiblement polaire.

6. Procédé selon la revendication 4 ou 5, **caractérisé en ce qu'**un solvant polaire est rajouté à la microémulsion après l'incorporation dudit agent porogène soluble dans l'eau dans la microémulsion (M₁).

7. Procédé selon l'une quelconque des revendications 2 à 6, **caractérisé en ce que** ledit (ou lesdits) composé(s) à base de silane est(sont) de formule générale :
SiR₁R₂R₃R₄
dans laquelle R₁, R₂, R₃ et R₄ sont, indépendamment les uns des autres, un hydrogène ; un halogène ; un groupe amine ; un groupe amide ; un groupe acyle ; un groupe vinyle : un groupe hydroxyle ; un groupe epoxy ; un groupe isocyanate ; un groupe carboxyle ; un groupe thiol (ou mercapto) ; un groupe acryloxy tel qu'un groupe méthacryloxy ; un groupe alkyle, linéaire ou ramifié, éventuellement substitué, de 1 à 12 carbones, notamment de 1 à 6 atomes de carbone ; un groupe aryle, linéaire ou ramifié, éventuellement substitué, de 4 à 15 carbones, notamment de 4 à 10 atomes de carbone ou un groupe alcoxyle de formule -OR₆ avec R₆ représentant un groupe alkyle, linéaire ou ramifié, éventuellement substitué, de 1 à 12 carbones, notamment de 1 à 6 atomes de carbone.

8. Procédé selon l'une quelconque des revendications 2 à 7, **caractérisé en ce que** ledit composé permettant l'hydrolyse du composé à base de silane est un composé choisi dans le groupe constitué par l'ammoniac, l'hydroxyde de potassium (KOH), l'hydroxyde de lithium (LiOH) et l'hydroxyde de sodium (NaOH).

9. Procédé selon l'une quelconque des revendications 2 à 8, **caractérisé en ce que** le solvant permettant de déstabiliser la microémulsion (M_{c}) est un solvant polaire tel que de l'éthanol, de l'acétone ou du THF.

10. Microémulsion (M_{c}) du type eau dans huile et susceptible d'être mise en oeuvre dans le cadre d'un procédé tel que défini à l'une quelconque des revendications précédentes, comprenant :
- au moins un tensioactif,
- au moins un co-tensioactif,
- au moins un solvant non-polaire ou faiblement polaire,
- au moins un solvant polaire,
- au moins un porogène soluble dans l'eau, notamment tel que défini à la revendication 3,
- au moins un composé à base de silane, notamment tel que défini à la revendication 7, et
- au moins un composé capable d'hydrolyser ledit composé à base de silane, notamment tel que défini à la revendication 8.

11. Microémulsion selon la revendication 10, **caractérisée en ce qu'**elle comprend :
- au moins un tensioactif en une quantité comprise entre 1 et 30 %, notamment entre 5 et 25 % et, en particulier, entre 10 et 20 % ;
- au moins un co-tensioactif en une quantité comprise entre 1 et 30 %, notamment entre 5 et 25 % et, en particulier, entre 10 et 20 % ;
- au moins un solvant non-polaire ou faiblement polaire en une quantité comprise entre 40 et 95 %, notamment entre 50 et 90 % et, en particulier, entre 60 et 80 % ;
- au moins un solvant polaire en une quantité comprise entre 0,5 et 20 %, notamment entre 1 et 15 % et, en particulier, entre 2 et 10 % ;
- au moins un porogène soluble dans l'eau en une quantité comprise entre 0,001 et 1 %, notamment entre 0,005 et 0,1 % et, en particulier, entre 0,001 et 0,05 % ;
- au moins un composé à base de silane en une quantité comprise entre 0,05 et 20 %, notamment entre 0,1 et 10 % et, en particulier, entre 0,5 et 5 % ; et
- au moins un composé capable d'hydrolyser ledit composé à base de silane en une quantité comprise entre 0,01 et 5 %, notamment entre 0,05 et 1 % et, en particulier, entre 0,1 et 0,5 %.

12. Particule de silice poreuse susceptible d'être préparée par un procédé tel que défini à l'une quelconque des revendications 1 à 9, **caractérisée en ce qu'**elle présente des pores ordonnés et uniformes possédant des diamètres inférieurs à 10 Å et une taille moyenne inférieure ou égale à 100 nm.

13. Utilisation d'une particule de silice poreuse selon la revendication 12, pour la séparation, la détection, la catalyse et la complexation d'un produit d'intérêt.

14. Utilisation selon la revendication 13 pour la complexation et l'emprisonnement d'ions métalliques, d'alcalins, d'alcalino-terreux, d'actinides et de lanthanides.

## Patentansprüche

1. Verfahren zur Herstellung eines porösen Silicapartikels, umfassend die folgenden Schritte:
- Herstellen eines Silicapartikels, umfassend ein in Wasser lösliches porogenes Agens, ausgehend von einer inversen Mikroemulsion, und anschließend
- Entfernen des porogenen Agens durch Auflösung.

2. Verfahren nach Anspruch 1, **dadurch gekennzeichnet, dass** es die folgenden Schritte umfasst:
a) Herstellen einer Mikroemulsion (*Mₐ*) vom Typ Wasser in Öl, die das in Wasser lösliche porogene Agens enthält,
b) Hinzufügen einer Verbindung, die die Hydrolyse einer Verbindung auf Basis von Silan erlaubt, zu der im Schritt (a) hergestellten Mikroemulsion (*Mₐ*),
c) Hinzufügen wenigstens einer Verbindung auf Basis von Silan zu der im Schritt (b) erhaltenen Mikroemulsion (*M_{b}*),
d) Hinzufügen eines Lösungsmittels zu der im Schritt (c) erhaltenen Mikroemulsion (*M_{c}*), das die Destabilisierung der Mikroemulsion erlaubt,
e) Wiedergewinnen der im Schritt (d) ausgefällten Silicapartikel, umfassend das porogene Agens, und
f) Entfernen des in Wasser löslichen porogenen Agens aus den während des Schritts (e) wiedergewonnenen Silicapartikeln durch Auflösung, um poröse Silicapartikel zu erhalten.

3. Verfahren nach Anspruch 1 oder 2, **dadurch gekennzeichnet, dass** das in Wasser lösliche porogene Agens ausgewählt ist aus der Gruppe gebildet durch die Cyclodextrine, die Cyclodextrinderivate, die Monosaccharide, die Oligosaccharide und die Polysaccharide.

4. Verfahren nach Anspruch 2 oder 3, **dadurch gekennzeichnet, dass** der Schritt (a) die Herstellung einer ersten Mikroemulsion (*M*₁) umfasst, in die später das in Wasser lösliche porogene Agens eingefügt wird.

5. Verfahren nach Anspruch 4, **dadurch gekennzeichnet, dass** die Mikroemulsion (*M*₁) erhalten wird, indem man wenigstens ein Tensid, wenigstens ein Cotensid und wenigstens ein unpolares oder schwach polares Lösungsmittel miteinander mischt.

6. Verfahren nach Anspruch 4 oder 5, **dadurch gekennzeichnet, dass** nach dem Einfügen des in Wasser löslichen porogenen Agens in die Mikroemulsion (*M*₁) ein polares Lösungsmittel zu der Mikroemulsion hinzugefügt wird.

7. Verfahren nach einem der Ansprüche 2 bis 6, **dadurch gekennzeichnet, dass** die Verbindung oder die Verbindungen auf Basis von Silan die allgemeine Formel hat/haben:
*SiR*₁*R*₂*R*₃*R*₄
wobei *R*₁, *R*₂, *R*₃ und *R*₄ unabhängig voneinander ein Wasserstoff, ein Halogen, eine Amingruppe, eine Amidgruppe, eine Acylgruppe, eine Vinylgruppe, eine Hydroxylgruppe, eine Epoxygruppe, eine Isocyanatgruppe, eine Carboxylgruppe, eine Thiol- (oder Mercapto-) gruppe, eine Acryloxygruppe wie zum Beispiel eine Methacryloxygruppe, eine lineare oder verzweigte, gegebenenfalls substituierte, Alkylgruppe mit 1 bis 12 Kohlenstoffen, insbesondere mit 1 bis 6 Kohlenstoffatomen, eine lineare oder verzweigte, gegebenenfalls substituierte, Arylgruppe mit 4 bis 15 Kohlenstoffen, insbesondere mit 4 bis 10 Kohlenstoffatomen, oder eine Alkoxylgruppe der Formel -*OR*₆, wobei *R*₆ eine lineare oder verzweigte, gegebenenfalls substituierte, Alkylgruppe mit 1 bis 12 Kohlenstoffen, insbesondere mit 1 bis 6 Kohlenstoffatomen ist, sind.

8. Verfahren nach einem der Ansprüche 2 bis 7, **dadurch gekennzeichnet, dass** die Verbindung, die die Hydrolyse der Verbindung auf Basis von Silan erlaubt, eine Verbindung ist, die ausgewählt ist aus der Gruppe gebildet durch Ammoniak, Kaliumhydroxyd (KOH), Lithiumhydroxyd (LiOH) und Natriumhydroxyd (NaOH).

9. Verfahren nach einem der Ansprüche 2 bis 8, **dadurch gekennzeichnet, dass** das Lösungsmittel, das die Destabilisierung der Mikroemulsion (*M_{c}*) erlaubt, ein polares Lösungsmittel wie zum Beispiel Ethanol, Aceton oder THF, ist.

10. Mikroemulsion (*M_{c}*) vom Typ Wasser in Öl, die dazu ausgelegt ist, im Rahmen eines Verfahrens wie in einem der vorhergehenden Ansprüche definiert verwendet zu werden, umfassend:
- wenigstens ein Tensid,
- wenigstens ein Cotensid,
- wenigstens ein unpolares oder schwach polares Lösungsmittel,
- wenigstens ein polares Lösungsmittel,
- wenigstens ein in Wasser lösliches Porogen, insbesondere wie in Anspruch 3 definiert,
- wenigstens eine Verbindung auf Basis von Silan, insbesondere wie in Anspruch 7 definiert, und
- wenigstens eine Verbindung, die dazu ausgelegt ist, die Verbindung auf Basis von Silan zu hydrolysieren, insbesondere wie in Anspruch 8 definiert.

11. Mikroemulsion nach Anspruch 10, **dadurch gekennzeichnet, dass** sie umfasst:
- wenigstens ein Tensid in einer Menge, die zwischen 1 und 30 % enthalten ist, insbesondere zwischen 5 und 25 %, und weiter insbesondere zwischen 10 und 20 %;
- wenigstens ein Cotensid in einer Menge, die zwischen 1 und 30 % enthalten ist, insbesondere zwischen 5 und 25 %, und weiter insbesondere zwischen 10 und 20 %,
- wenigstens ein unpolares oder schwach polares Lösungsmittel in einer Menge, die zwischen 40 und 95 % enthalten ist, insbesondere zwischen 50 und 90 %, und weiter insbesondere zwischen 60 und 80 %;
- wenigstens ein polares Lösungsmittel in einer Menge, die zwischen 0,5 und 20 % enthalten ist, insbesondere zwischen 1 und 15 %, und weiter insbesondere zwischen 2 und 10 %;
- wenigstens ein in Wasser lösliches Porogen in einer Menge, die zwischen 0,001 und 1 % enthalten ist, insbesondere zwischen 0,005 und 0,1 %, und weiter insbesondere zwischen 0,001 und 0,05 %;
- wenigstens eine Verbindung auf Basis von Silan in einer Menge, die zwischen 0,05 und 20 % enthalten ist, insbesondere zwischen 0,1 und 10 %, und weiter insbesondere zwischen 0,5 und 5 %; und
- wenigstens eine Verbindung, die dazu ausgelegt ist, die Verbindung auf Basis von Silan zu hydrolysieren, in einer Menge, die zwischen 0,01 und 5 % enthalten ist, insbesondere zwischen 0,05 und 1 %, und weiter insbesondere zwischen 0,1 und 0,5 %.

12. Poröses Silicapartikel, das durch ein Verfahren wie in einem der Ansprüche 1 bis 9 definiert herstellbar ist, **dadurch gekennzeichnet, dass** es geordnete und gleichförmige Poren aufweist, die Durchmesser von weniger als 10 Å und eine mittlere Größe besitzen, die kleiner oder gleich 100 nm ist.

13. Verwendung eines porösen Silicapartikels nach Anspruch 12 für die Separierung, die Erfassung, die Katalyse und die Komplexierung eines interessierenden Produkts.

14. Verwendung nach Anspruch 13 für die Komplexierung und den Einfang von Ionen von Metallen, von Alkalistoffen, von Erdalkalistoffen, von Actiniden und von Lanthaniden.

## Claims

1. Process for preparing a porous silica particle comprising the steps consisting in:
- preparing, from a reverse microemulsion, a silica particle comprising a water-soluble pore-forming agent; then
- removing said pore-forming agent by dissolution.

2. Process according to Claim 1, **characterized in that** it comprises the following steps:
a) preparing a microemulsion (Mₐ) of the water-in-oil type containing said water-soluble pore-forming agent;
b) adding, to the microemulsion (Mₐ) prepared in step (a), a compound that enables the hydrolysis of a silane-based compound;
c) adding, to the microemulsion (M_{b}) obtained in step (b), at least one silane-based compound;
d) adding, to the microemulsion (M_{c}) obtained in step (c), a solvent that makes it possible to destabilize said microemulsion;
e) recovering the silica particles comprising said pore-forming agent which are precipitated during step (d); and
f) removing, by dissolution, the water-soluble pore-forming agent from the silica particles recovered during step (e) in order to obtain porous silica particles.

3. Process according to Claim 1 or 2, **characterized in that** said water-soluble pore-forming agent is chosen from the group constituted by cyclodextrins, cyclodextrin derivatives, monosaccharides, oligosaccharides and polysaccharides.

4. Process according to Claim 2 or 3, **characterized in that** said step (a) consists in preparing a first microemulsion (M₁) into which the water-soluble pore-forming agent is subsequently incorporated.

5. Process according to Claim 4, **characterized in that** said microemulsion (M₁) is obtained by mixing together at least one surfactant, at least one cosurfactant and at least one non-polar or weakly polar solvent.

6. Process according to Claim 4 or 5, **characterized in that** a polar solvent is added to the microemulsion after the incorporation of said water-soluble pore-forming agent into the microemulsion (M₁).

7. Process according to any one of Claims 2 to 6, **characterized in that** said silane-based compound(s) is (are) of general formula:
SiR₁R₂R₃R₄
in which R₁, R₂, R₃ and R₄ are, independently of one another, a hydrogen; a halogen; an amine group; an amide group; an acyl group; a vinyl group; a hydroxyl group; an epoxy group; an isocyanate group; a carboxyl group; a thiol (or mercapto) group; an acryloxy group such as a methacryloxy group; an optionally substituted, linear or branched, alkyl group having 1 to 12 carbons, especially 1 to 6 carbon atoms; an optionally substituted, linear or branched, aryl group having 4 to 15 carbons, especially 4 to 10 carbon atoms or an alkoxy group of formula -OR₆ with R₆ representing an optionally substituted, linear or branched, alkyl group having 1 to 12 carbon, especially 1 to 6 carbon atoms.

8. Process according to any one of Claims 2 to 7, **characterized in that** said compound that enables the hydrolysis of the silane-based compound is a compound chosen from the group constituted by ammonia, potassium hydroxide (KOH), lithium hydroxide (LiOH) and sodium hydroxide (NaOH),

9. Process according to any one of Claims 2 to 8, **characterized in that** the solvent that makes it possible to destabilize the microemulsion (M_{c}) is a polar solvent such as ethanol, acetone or THF.

10. Microemulsion (M_{c}) of the water-in-oil type and that is capable of being used in the context of a process as defined in any one of the preceding claims, comprising:
- at least one surfactant;
- at least one cosurfactant;
- at least one non-polar or weakly polar solvent;
- at least one polar solvent;
- at least one water-soluble pore-forming agent, especially as defined in Claim 3;
- at least one silane-based compound, especially as defined in Claim 7; and
- at least one compound capable of hydrolysing said silane-based compound, especially as defined in Claim 8.

11. Microemulsion according to Claim 10, **characterized in that** it comprises:
- at least one surfactant in an amount between 1 and 30%, especially between 5 and 25% and, in particular, between 10 and 20%;
- at least one cosurfactant in an amount between 1 and 30%, especially between 5 and 25% and, in particular, between 10 and 20%;
- at least one non-polar or weakly polar solvent in an amount between 40 and 95%, especially between 50 and 90% and, in particular, between 60 and 80%;
- at least one polar solvent in an amount between 0.5 and 20%, especially between 1 and 15% and, in particular, between 2 and 10%;
- at least one water-soluble pore-forming agent in an amount between 0.001 and 1%, especially between 0.005 and 0.1% and, in particular, between 0.001 and 0.05%;
- at least one silane-based compound in an amount between 0.05 and 20%, especially between 0.1 and 10% and, in particular, between 0.5 and 5%; and
- at least one compound capable of hydrolysing said silane-based compound in an amount between 0.01 and 5%, especially between 0.05 and 1% and, in particular, between 0.1 and 0.5%.

12. Porous silica particle capable of being prepared by a process as defined in any one of Claims 1 to 9, **characterized in that** it has ordered and uniform pores having diameters of less than 10 Å and an average size of less than or equal to 100 nm.

13. Use of a porous silica particle according to Claim 12, for separating, detecting, catalysing and complexing a product of interest.

14. Use according to Claim 13 for complexing and trapping metal ions, alkali metal ions, alkaline-earth metal ions, actinide ions and lanthanide ions.
